Europäisches Patentamt

(19) European Patent Office

Office européen des brevets

(11) Publication number: **0 183 393 B1**

(12) **EUROPEAN PATENT SPECIFICATION**

(45) Date of publication of patent specification: 04.09.91

(21) Application number: 85307786.5

(22) Date of filing: 28.10.85

(51) Int. Cl.⁵: **D21H 27/40**, D21H 19/74, D21H 21/34, C09K 21/02, B32B 29/08, H05K 9/00, B31F 1/28, B05C 5/02

(54) **Fire resistant materials.**

(30) Priority: 31.10.84 US 666787

(43) Date of publication of application:
04.06.86 Bulletin 86/23

(45) Publication of the grant of the patent:
04.09.91 Bulletin 91/36

(84) Designated Contracting States:
AT BE CH DE FR GB IT LI LU NL SE

(56) References cited:
AU-B- 448 838          AU-B- 455 793
FR-A- 594 521          FR-A- 864 284
FR-A- 2 378 630       GB-A- 551 250
US-A- 2 568 849       US-A- 3 027 291
US-A- 3 256 126       US-A- 3 886 019
US-A- 4 376 674

ABSTRACT BULLETIN OF THE INSTITUTE OF
PAPER CHEMISTRY, vol. 50, no.4, October
1979, p. 418, ref.no. 3919; Appleton, Wisc., US

ABSTRACT BULLETIN OF THE INSTITUTE OF
PAPER CHEMISTRY, vol. 53,no. 6, December

1982, p. 720, ref.no. 6639; Appleton, Wisc., US

(73) Proprietor: **DIGITAL EQUIPMENT CORPORA-
TION**
111 Powdermill Road
Maynard Massachusetts 01754-1418(US)

(72) Inventor: **Kelly, Richard A.**
18701 Stratford Road, 303
Minnetonka Minnesota 55345(US)
Inventor: **Walker, Archibald L.**
RR 2, Box 278 Laurel Drive
Woodstock Connecticut 06281(US)

(74) Representative: **Sommerville, John Henry et al**
SOMMERVILLE & RUSHTON 11 Holywell Hill
St. Albans Hertfordshire, AL1 1EZ(GB)

## Description

The present invention relates generally to fire resistant products, and in particular to fire resistant, cellulose, corrugated, laminated products such as corrugated container wall materials (corrugated paperboard); and to methods for forming such a product. However, the invention is not limited to container wall materials or methods of making them, as will become clear from the following description.

Systems currently in use for manufacturing corrugated structures typically employ fluting rollers for fluting a medium, generally paper drawn off a first roll, to form a corrugated (fluted) layer. The fluting medium is passed through the fluting rollers, which generally are heated to temperatures above about 180° C (about 350° F), adhesive is applied to the crests of the flutes, and a liner board, generally paper drawn off a second roll, is applied to form a single faced fluted structure. Typically the resulting single faced fluted structure then may be further processed in order to enhance the strength of the fluted structure by drawing a second liner board drawn off a third roll over another preheating roller, and adhesively affixing a second liner board to the exposed crests of the flutes of the single face fluted structure, whereby to form single wall corrugated structure. The single wall corrugated structure is then passed over a heated medium or hot plate section while subjected to pressure from a weight roller and belt assembly above the hot plate section.

The adhesive conventionally employed to bond the fluted medium to the liner boards is a so-called "Stein-Hall" starch-based adhesive, typically cornstarch, and containing formaldehyde as an antifungal agent, and caustic soda for pH adjustment. The starch-based adhesive also may contain borax or other tackifying agent to increase the tack of the adhesive (see U.S. Patent Nos. 3151996 and 2833662). Due to its relatively short shelf-life, in order to prevent unwanted (premature) setting, the starch based adhesive ordinarily is cooked, i.e., batch-wise, by heating an aqueous slurry comprising a measured quantity of starch to gradually bring the temperature of the slurry to jellation temperature. Several processes also have been developed for cooking the starch slurry substantially instantaneously. (See U.S. Patent Nos. 2609326, 2717213, 3113836, 3228781, 3308037 and 3450549.)

One problem in a conventional corrugating system is the occurrence of malformed flutes in the fluting medium. Malformed flutes may be formed during the initial fluting or may result during subsequent processing. The main processing areas at which deformation may occur are in the removal of the fluted medium from the fluting rollers, and in the hot plate (adhesive setting) section. Deformation during removal of the fluted medium from the fluting rollers results primarily from the inability of the fluted medium properly to release from the fluting rollers after application of heat and pressure in the nip of the rollers.

Deformation frequently also occurs in the hot plate section of a double backing operation, i.e. when the second liner board is adhesively applied to the crests of the exposed flutes of the single face corrugated structure, and the single wall corrugated structure is passed over a hot plate section with pressure applied from a belt and weight roller assembly above the hot plates in order to cure the adhesive and dry the corrugated structure. The high coefficient of friction between the hot plate section and the face of the liner board may result in deformed flutes (i.e. "fracture") or "leaning" as the single wall corrugated structure is subjected to shear forces between the belt and weight roller assembly and the hot plate section surfaces.

A high shear force in the single wall corrugated structure also may produce a loss of strength in the adhesive bond between the second liner board and the crests of the flutes of the single faced fluted structure. Typically, the adhesive bond for the second liner board may not be fully set so that when the single wall corrugated structure enters the hot plates, high shear forces therein can break the initial bond resulting in slippage between the second liner board and the single faced fluted structure.

The prior art has attempted to solve the flute deformation problems by preconditioning the fluting medium with steam, using a heated roll filled with steam with slots or outlets to release the steam across the width of the paper, and a top steam shower. The fibers of the paper become softened and pliable as a result of this steam treatment. The steam is however applied some distance (usually a matter of a few centimetres in most cases) before the paper enters the fluting rollers and therefore may not be entirely effective at the nip of the fluting rollers where the flutes are formed. Moreover, the steam treatment adds substantial energy requirements to the corrugating system both for the initial generation of the steam, and for subsequent heating of the resulting corrugated structure to dry the product.

Product loss also results from so-called "S-warp" and "blistering" which results from uneven cooling of the corrugated structure as the adhesive sets. Product loss from "S-warp" and "blistering" reportedly is as high as 5% to 9%.

One way in which to solve the problems of malformed or deformed flutes and "S-warp" is to run the corrugating system at a low rate of production. Thus, while modern corrugating equipment producing single face structure may have a throughput capacity in excess of 5 m/s (or 1000 feet per minute), typically, corrugating equipment using Stein-Hall starch based adhesives reportedly may operate at throughput speeds of only about 1 to 1.8 m/s (or 200 to 350 feet per minute) for producing single walled corrugated structure.

A number of investigators have proposed various solutions for increasing throughput speed in a corrugating system. For example, the prior art has attempted to solve the flute malformation problem by the use of various lubricants applied to the fluting medium and/or the fluting rollers. (See, for example, U.S. Patents Nos. 1796542, 3676247 and 3103459.) The lubricants typically are of a hydrocarbon base such as a paraffin, wax or polyethylene, and may be applied in liquid form, or in solid bar form applied to the paper stock or to the crests of the fluting rollers. While these hydrocarbon base lubricants release the fluting medium from the fluting rollers, and thus reportedly result in some improvement in flute formation and somewhat higher operating speed, the use of such hydrocarbon base lubricants results in additional problems. For one, such lubricants have a tendency to be absorbed by the fluting medium and/or liner board resulting in the discoloration of the fluted medium and/or liner board. Such hydrocarbon base lubricants also tend to vaporise under operating temperatures of the fluting rollers and hot plates and the resulting hot oil vapours may produce unacceptable concentrations of hydrocarbons in the shop atmosphere. Moreover, these hydrocarbon base lubricants also may increase the flammability of the resulting corrugated structure.

U.S. Patent 3676247 discloses the manufacture of corrugated paperboard structures at ambient or intermediate temperatures, up to 160°C (320°F) by treating both sides of a fluting medium, prior to corrugation, with a lubricant such as a mixture of stearates and paraffin wax. The treatment reportedly releases the fluting medium from the fluting rollers, whereby to permit running the fluting rollers at substantially higher speeds without the need for heating and/or steaming the fluting medium. Morris et al then apply a film of adhesive such as sodium silicate to the high points (crests) of the exposed flutes on one side of the fluted medium and secure a liner board to one side of the fluted medium, and a cold-set adhesive of the polyvinyl acetate type or of the polyvinyl alcohol type is then used for securing one or more additional liner boards to the other side of the resulting single faced fluted structure at intermediate or ambient temperatures. While the method of manufacturing corrugated paperboard structures described in US-A-3 676 247 reportedly eliminates many of the disadvantages of the hot process, including defects known in the trade as "washboarding", "S-warp", "blistering" and "interlift" of the liners together with "high-lows", "leaning" and "fracture" of the flutes, the US-A-3 676 247 process creates an extremely flammable end product due to the use of polyvinyl acetate or polyvinyl alcohol-type adhesives. Flammability problems exist in the manufacturing plant and may present an extreme danger.

A number of investigators have proposed various solutions for making corrugated container wall materials flame retardant or fire resistant. Such prior art investigators, however, have concentrated their efforts on modifying the "wet side" chemistry of the paper stock. While such prior art efforts have resulted in some reduction in flammability of the resulting corrugated container wall material, none of the prior art solutions is believed to have produced a truly fire resistant corrugated container wall materials. Moreover, the modification of the paper chemistry on the "wet side" has resulted in additional complications in the manufacturing process, since many of the flame retardant materials employed on the "wet side" chemistry are adversely affected by the high temperatures of a conventional corrugating system.

It is thus a primary object of the present invention to provide new and improved corrugated structures, which structures are characterized by resistance to fire or heat, and low flame spread. Still other more specific objects of the present invention are to provide new and improved corrugated container wall materials which exhibit good mechanical properties, and resistance to fire or heat, and which corrugated container wall materials may be economically manufactured using existing equipment with only minor (low cost) modification, and at reduced energy costs and increased yields, and to provide novel processes for producing corrugated container wall materials having the aforesaid characteristics, and apparatus for practicing such processes.

The document GB-A-551250 teaches the use of sodium silicate (waterglass) as an adhesive for manufacturing corrugated paperboard, by a method in which the assembled paperboard product is conveyed between heated drying plates so as to set and dry the waterglass adhesive.

According to the invention in a first aspect, there is provided a corrugated laminated cellulose product comprising at least two sheets of cellulose material, including at least one liner board and at least one fluted medium sheet affixed to one another by a sodium silicate adhesive characterised by the fact that said sodium silicate is heat-foamable and is dried in place from an aqueous solution substantially under ambient conditions.

According to the invention in a second aspect, a method of forming a laminated corrugated cellulose product comprising at least two sheets of cellulose material including at least one liner board and at least one fluted medium sheet, wherein an aqueous solution of sodium silicate adhesive material is applied to at least one of said sheets and the sheets are placed in pressing relationship under conditions to promote curing of said adhesive, is characterised by the fact that said sodium silicate is heat-foamable and dried-in-place substantially under ambient conditions.

Unlike the method disclosed in GB-A-551250, in the method of this invention the sodium silicate adhesive is dried in place, substantially under ambient conditions.

Generally, in the practice of this invention, new fire resistant products are provided comprising a normally combustible carrier or substrate having applied thereto a sodium silicate which is heat-foamable to produce an element capable of resisting the passage of fire therethrough in the event said material is exposed to fire or heat. The sodium silicate acts as an intumescent material, which, upon exposure to heat or fire, forms a mechanically stable foam which acts (a) as an oxygen denial barrier, and (b) a heat reradiator and/or thermal insulator reradiator. The foam also limits the fuel vapour generation rate of the normally combustible carrier or substrate whereby to prevent combustion of the carrier or substrate. In a typical embodiment of the invention, the normally combustible substrate comprises a laminated paper product in which the sodium silicate also functions as the laminating adhesive. In such embodiment the sodium silicate typically will be applied in an amount (dry) of at least about 1.5 Kg per hundred square metres (3 lb per thousand square feet) of the paper product. If desired, one or more compatible substances such as, for example, dyes, wetting agents, surfactants, dispersants, fungicides, bactericides, extenders, etc. may be added to the sodium silicate. The fire resistant products are prepared by applying to the normally combustible carrier or substrate sufficient sodium silicate to provide the desired intumescence. In the case of laminated paper product the sodium silicate is applied to one or both paper elements to be laminated, the elements are then pressed into adhering contact with the sodium silicate between them, and the sodium silicate permitted to set. In an especially typical embodiment of the invention the fire resistant normally combustible product comprises a corrugated container wall material (corrugated paperboard), and the sodium silicate is the sole adhesive employed for laminating the various fluting media and liner boards.

Still other objects in any of the advantages of the present invention will become clear from the following description taken in connection with the accompanying drawings wherein like numerals denote like elements, and:

Fig. 1 is a fragmentary prospective view of a fire resistant product in the form of corrugated container wall materials produced in accordance with the present invention;

Fig. 2 is a fragmentary side elevational view of an apparatus for manufacturing fire resistant corrugated container wall materials in accordance with the present invention;

Fig. 3 is a side elevational view of the coater/pressure impregnator portion of the apparatus of Fig. 2 taken through lines 3-3 of Fig. 2;

Fig. 4 is a bottom view, in partial cross section, showing details of the valve and valve housing of the coated pressure impregnator of Fig. 3;

Fig. 5 is an end view showing details of the valve and valve housing of Fig. 4;

Figs. 6 to 11 are cross-sectional views of yet other embodiments of fire resistant corrugated container wall materials made in accordance with the present invention; and

Fig. 12 is a fragmentary perspective view showing yet another embodiment of fire resistant structure made in accordance with the present invention.

In the following detailed description of the present invention, the terms "carrier" or "substrate" are to be understood as referring to mechanical support structures. The terms "laminated product" and "laminate" are to be understood as referring to a structure consisting of at least one base layer having at least one additional layer adhesively affixed thereto. The layers may consist of flat stock, or one or more of the layers may comprise a fluted medium as in the case of corrugated container wall materials. The term "intumescence" refers to the property of a material to swell or foam when exposed to high temperature or fire. The term "compatible" as used in connection with the substances added to the sodium silicate are to be understood as referring to those substances which enhance handling characteristics, adhesive characteristics and/or fire resistant characteristics of the sodium silicate, all as will be described in detail hereinafter. And, the terms "corrugated" and "corrugating" may be used interchangeably with the terms "fluted" and "fluting", respectively, as is conventional in the art.

As noted supra the use of sodium silicate as an adhesive for corrugated paperboard structure has previously been investigated However, US-A-3 676 247 applies a film of sodium silicate adhesive only to the high points (crests) of the exposed flutes one side of the fluted medium with the result that the sodium silicate film is largely discontinuous, and the sodium silicate applied to the laminated product is present in quite small amounts. And as noted supra, for securing the other liner boards to the resulting single faced fluted structure, US-A-3 676 247 employs polyvinyl acetate or polyvinyl alcohol type adhesives which present severe flammability problems during manufacturing, and increase substantially the flammability of the resulting corrugated structure. The present invention is based in part on the discovery that sodium silicate, when applied to a normally flammable laminated product in sufficient quantities provides the dual functions of (1) strong adhesive strength and (2) fire resistance.

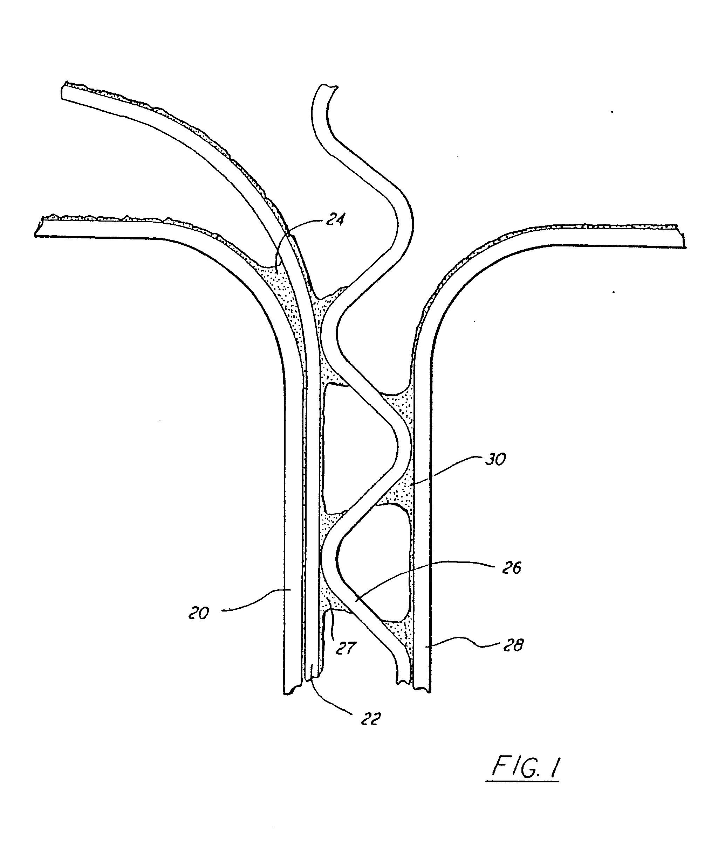

One embodiment of this invention is shown in Fig. 1 of the drawings. Referring to Fig. 1 of the drawings, a corrugated container wall material is shown having an external wall comprising a laminate of two liner board layers 20 and 22. Layers 20 and 22 comprise conventional flat liner board stock, typically a basic kraft paper stock or the like. Layers 20 and 22 are laminated to one another by a sodium silicate adhesive 24 which typically is applied in an amount (dry weight) of about 1.5 to about 29 Kg per hundred square metres (or about 3 to 60 lb per thousand square feet) of liner board stock. Layer 22 in turn is adhesively affixed to a paperboard fluting medium 26 by means of a second layer 27 of sodium silicate adhesive typically applied in an amount (dry weight) of about 1.5 to about 29 Kg per hundred square metres, of corrugating medium, typically about 1.5 to about 12 Kg per hundred square metres and most typically about 1.5 to about 4.5 Kg per hundred square metres of liner board stock. A third flat liner boardstock layer 28 is affixed to the other side of fluting medium 26 by means of a sodium silicate adhesive 30 applied in an amount (dry weight) in the range of about 1.5 to about 29 Kg per hundred square metres, typically about 1.5 to about 12 Kg per hundred square metres and most typically about 1.5 to about 4.5 Kg per hundred square metres of liner board stock. For use in making a box or like container, the laminate of layers 20 and 22 typically will be formed as the external layer of the box, while liner board layer 28 will be the internal layer. Boxes made from the corrugated container wall materials of the present invention are thermally reactive. When subjected to heat or flame, some combustion is required to generate fire resistance.

The sodium silicate material may consist solely of liquid sodium silicate solution (waterglass) as is available commercially from a number of manufacturers. In the current practice of the present invention liquid sodium silicates available from Diamond Shamrock Company, and having solid contents of between about 37.9% and 48.0% have been advantageously employed. Generally, the sodium silicate is employed as it comes from the manufacturer. While a small amount of water may be added to reduce the viscosity of the liquid sodium silicate solution for certain applications, dilution generally is not recommended since the added water increases the cure time and energy requirements of the applied sodium silicate material.

The degree of fire resistance achieved in the present invention appears to depend primarily on the amount of sodium silicate applied to the combustible carrier or substrate material. Acceptable fire resistance may be imparted to paper products by the application of as little as 1.5 Kg (dry weight) per hundred square metres (3 lb per thousand square feet) of product, and fire resistance increases with the amount of sodium silicate applied to the product up to about 29 Kg (dry weight) per hundred square metres (60 lb per thousand square feet) of product. Application of sodium silicate in an amount in excess of about 29 Kg (dry weight) per hundred square metres typically does not appear to materially further improve fire resistance (or adhesive strength). However, fire resistance can be increased by the inclusion of additional layers of sodium silicate carrying laminates.

If desired one or more compatible inorganic oxides or salts, as will be described in detail hereinafter, may be blended with the sodium silicate material to modify certain handling characteristics of the sodium silicate and/or further enhance fire resistance and/or mechanical properties, e.g. strength of the resulting material.

While not wishing to be bound to theory, it is believed that sodium silicate provides two separate mechanisms in sequence for resisting fire. Upon first exposure to high temperature the sodium silicate coating undergoes detachment of bound water molecules in the form of water vapor. The release of the water molecules and production of water vapor acts to remove incident heat from the surface of the corrugated container wall material whereby to generate a thermal lag and thus protect the otherwise combustible substrate and the contents of the box formed from the corrugated container wall material for a period of time. This water molecule depletion mechanism tends also to maintain the corrugated container wall material at a somewhat constant temperature until the sodium silicate core material becomes substantially depleted of water molecules. Following release of the bound water molecules, the sodium silicate then undergoes intumescence, forming a mechanically stable foam consisting of the inorganic silicate. The resulting foam serves as an oxygen denial barrier and heat reflector or reradiator providing further protection of the otherwise combustible substrate and of objects contained within the box formed from the corrugated container wall material. The foam, which is non-combustible, also inhibits pyrolytic degradation of the cellulose fibers of the paper stock, and if present in sufficient quantity thermally insulates the box and contents so as to limit the fuel vapor generation rate of the combustible materials of the box (and contents). It has been observed that the silicate protective foam may not prevent the cellulose fibers themselves from undergoing thermal decomposition and subsequent generation of combustible gases. However, under ordinary fire conditions, the rate at which the fibers decompose when protected by the silicate foam typically is insufficient to generate combustible gases in a sufficient quantity to form a sustaining combustible mixture at normal oxygen levels. It has been observed that the material of the present invention is self-extinguishing with the removal of external fire sources. Thus, following exposure to fire, a box or container made from corrugated container wall material in accordance with the present invention may have the appearance of a charred substance. However, the box or container still may be intact and the contents of the box may be protected from fire. As a result boxes or containers formed from corrugated container wall material made in accordance with the present invention may be subjected to higher thermal flux for a longer period of time than conventional boxes or containers made from conventional corrugated container wall materials using conventional paper stock and adhesives. This added margin of time safety typically will permit dousing of fires, e.g. through automatic sprinkling systems or the like. Moreover, inasmuch as the corrugated container wall material itself is fire resistant, it will reduce propagation of the fire as in the case of conventional boxes or containers made from conventional corrugated container wall materials using paper stock and adhesives.

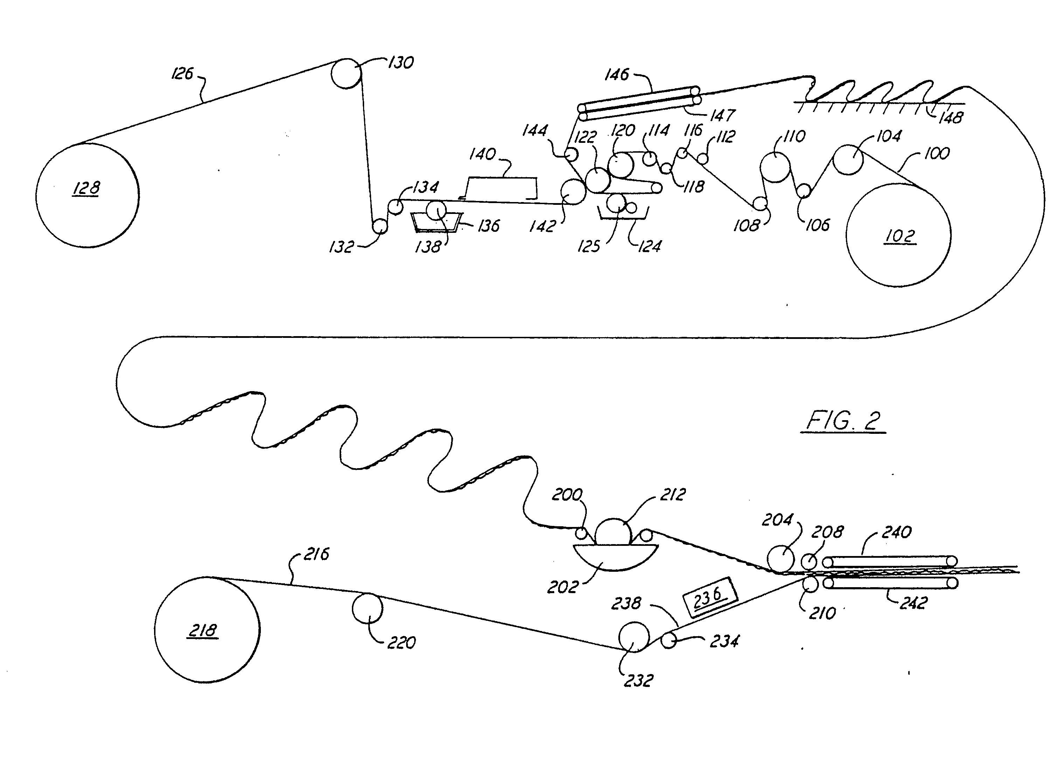

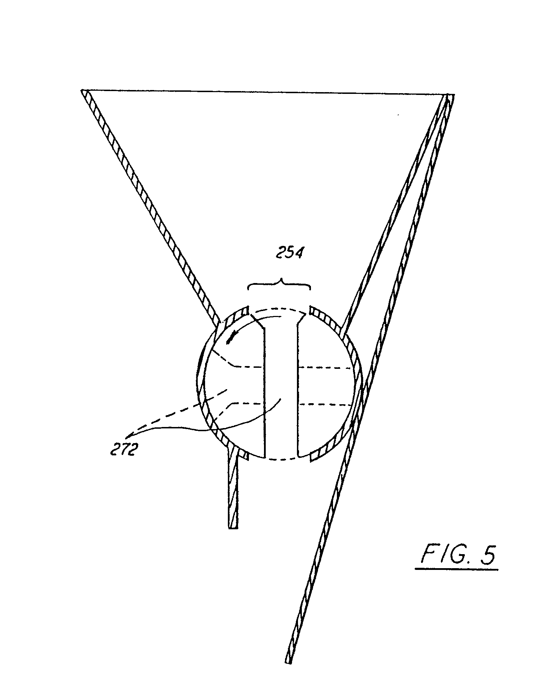

One method and apparatus for producing corrugated container wall materials in accordance with the present invention is shown in Figs. 2 to 5. Referring in particular to Fig. 2, a paperboard web 100 from which the fluting medium is formed is carried from a roll 102 from which it is drawn, over a guide roller 104, tensioning rollers 106 and 108 and a conditioning roller 110 for conditioning the web preparatory to fluting. The web is then passed between Guide rollers 112 and 114 under tensioning rollers 116 and 118 to the fluting rollers 120 and 122. Fluting rollers 120 and 122 have intermeshing ribs or teeth to form flutes in the web. The first fluting roller 120 may be heated e.g. by means of steam, e.g. to a temperature in the range of 51 ˚C to 66 ˚C (125 ˚F to 150 ˚F) to facilitate formation of the flutes. However, unlike prior art practices, the second fluting roller 122 may be left at ambient temperature or may be cooled, e.g as by circulating water, for reasons as will be explained hereinafter. Located in association with the second fluting roller 122 is an applicator mechanism indicated generally at 124 by which sodium silicate may be applied, for example, by means of a glue roll applicator 125, to the crests of the flutes of fluted web 100 for bonding a liner board sheet 126 to one side thereof. In order to facilitate handling, the sodium silicate adhesive typically will be heated by means (not shown) to a temperature above ambient but below its crystallisation temperature of 69.4 ˚C (157 ˚F).

Liner board 126 is also in the form of a paperboard web wound in a roll 128 and is carried over a guide roller 130 and tension rollers 132 and 134 through an adhesive application system indicated generally at 136, wherein sodium silicate is applied to the underside of the liner board material 126. The sodium silicate application system 136 is of conventional construction known per se in the art and may comprise a gravure roller 138. It is to be understood, however, that sodium silicate application system 136 may comprise other types of construction consistent with the handling of sodium silicate, for example, a trough applicator, wave applicator, foam applicator or the like. The sodium silicate coated/impregnated liner board 126 (as used herein the term "coated" will be understood to mean "coated and/or impregnated") then is passed through an ambient air circulator shroud 140 wherein the sodium silicate coating is dried to tack, and the liner board then is passed under pressure guide roller 142 which may be water cooled and which presses the liner board into binding contact with the adhesive on the crests of the flutes. There results a single faced fluted structure comprising fluted web 100 and laminated liner board 126 which is then passed over guide rollers 144 and between the nip of nip point rollers and tractor belts 146 and 147 to a bridge conveyor 148 which serves as a buffer for differences between the operational speed of the single facer apparatus just described and a subsequent double backer apparatus as will be described in detail hereinafter.

The resulting single faced fluted structure is then passed over a guide roller 200 and into and through a sodium silicate adhesive roll applicator 202 wherein a film of sodium silicate is applied to the exposed crests of the flutes. The sodium silicate coated single faced fluted structure is then withdrawn from applicator 202 and passed under a guide roller 204 between opposed guide rollers 208, 210, for mating with a second (bottom) liner board 216. Roller 212 opposed to applicator 202 is used to maintain the fluted structure in contact with the adhesive roll applicator 202. At the same time, liner board 216 from a supply roll 218 is passed over a guide rollers 220, 232 and 234 to a coater/pressure impregnator station 236 as will be described in detail hereinafter, wherein sodium silicate is applied to the top side 238 of liner board 216.

At this point, the liner board 216 is integrally bonded to the single faced fluted structure by passing the sheets between the nip of nip point rollers and tractor belts 240 and 242 whereby to form single wall corrugated product. Subsequently, if desired, additional liner boards may be laminated to one another in place of the liner board 216 and 126 resulting in single wall corrugated product with multiple sodium silicate coated liner board. The fluting medium 100 may be multiple layer stock also. Using multiple layer stock with multiple sodium silicate layers increases the fire resistance as well as the strength of the finished product. In order to maximize penetration of the sodium silicate into the liner board stock, the liner board stock typically comprises saturating stock having a moisture content of two to nine percent.

As noted supra, the degree of fire resistance achieved in the present invention appears to depend primarily from the amount of sodium silicate applied to the combustible carrier or substrate material. Accordingly, while not necessary for successful practice of the present invention, it is typical that the sodium silicate be applied to the combustible carrier or substrate material so as at least partially to penetrate the surface of the carrier or substrate whereby to impregnate the carrier or substrate material. Due to its relative high viscosity it is somewhat difficult to achieve substantial penetration or impregnation of sodium silicate into many common carrier or substrate materials. While the viscosity of sodium silicate may be lowered and thus its penetration or impregnation rate enhanced by dilution with water, as noted supra dilution with water generally is not recommended since the added water increases the cure time of the applied sodium silicate.

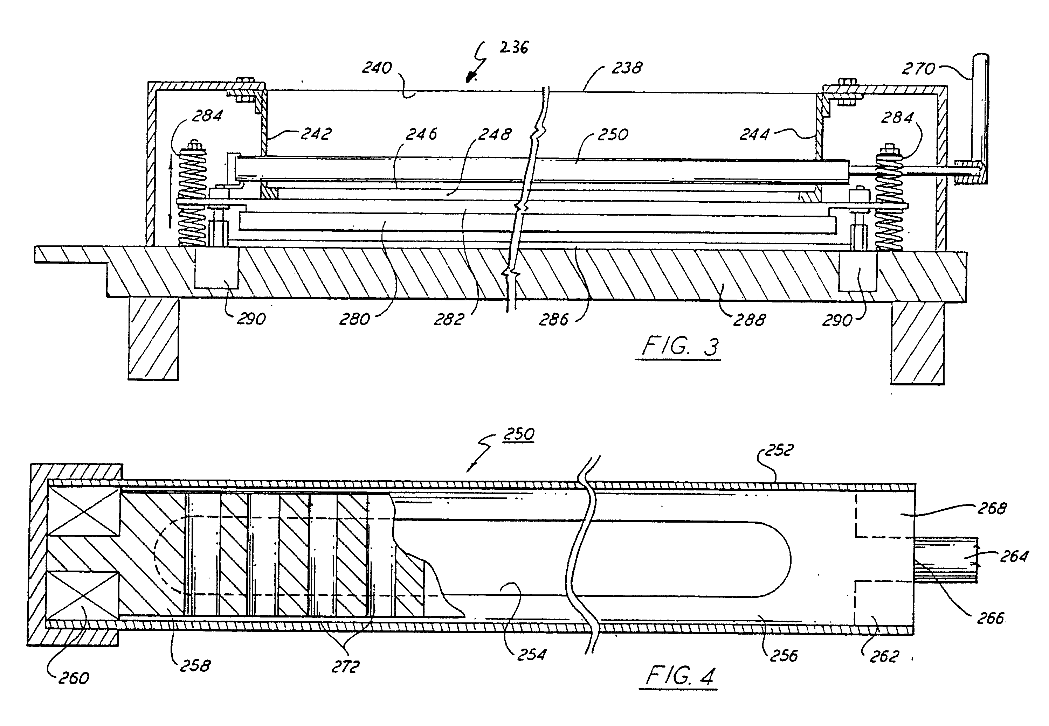

Referring in particular to Figs. 3 to 5, there is shown one embodiment of coater/pressure impregnator station particularly adapted for coating and impregnating undiluted sodium silicate into the surface of a carrier or substrate material in accordance with the present invention. The coater/pressure impregnator station 236 comprises a liquid distribution system having a liquid reservoir tank in the form of an elongated housing or enclosure 238 having a closed top 240, closed side and end walls 242 and 244, and a bottom wall 246 having an elongated slot 248. An elongated valve assembly 250 is mounted onto the bottom of tank 238 in fluid communication therewith for controlling withdrawal of liquid from the tank. Elongated valve assembly 250 comprises an elongated valve housing 252 having elongated slot 254 formed in the housing top and bottom walls, only one of which 256 is shown. An elongated valve core 258 having a plurality of passages 272 therethrough is mounted in the elongated valve housing 252, in a pair of bushings, 260 and 262, contained within the elongated housing. One end 264 of the valve core extends as through an orifice 266 in the valve side wall 268 and is fixed to a handle member 270. Thus, the valve core 258 is mounted for rotation within the valve housing 252 and may be adjusted by rotating handle member 270.

Mounted immediately below and in fluid communication with the valve assembly 250 is a Meyer rod 280 and Meyer rod frame assembly 282. Meyer rod frame assembly member 282 is mounted on a pair of spring assemblies 284 for reasons as will be explained hereinafter. A pressure pad 286, mounted on a base plate 288, is disposed immediately below Meyer rod 282. Base plate 288 is fixedly mounted in stationary position by means not shown. Completing the coater/impregnator station are a pair of pneumatic control cylinders 290 and controls (not shown) for selectively vertically positioning the Meyer rod frame assembly 282 and the attached Meyer rod 280 relative to the pressure pad 286.

In operation the amount of sodium silicate applied to the carrier or substrate and the degree of penetration therein can be adjusted by controlling the flow of sodium silicate through the valve, and by adjusting the pressure of Meyer rod 280 relative to pressure pad 286.

While the above described coater/pressure impregnator station 236 is particularly useful for applying (and impregnating) a substantially uniform coating of sodium silicate onto the top side surface of a moving web (i.e. the second liner board) in accordance with the present invention, it will be understood that other means may be employed for applying the sodium silicate material to the top side surface of the second liner board. For example, by suitably positioning the second liner board supply roll, the liner board may be withdrawn from the roll, coated with sodium silicate on its bottom side, e.g. as by passing through a trough applicator containing sodium silicate, and then passed over a reversing roller for lamination with the single faced fluted structure. (As used herein the terms "adhere" and "adhesion" will be understood to mean "adhesion and/or lamination.") Alternatively, the sodium silicate adhesive may be applied to the top side surface of the second lining sheet by means of a conventional knife coater or the like.

The resulting single wall corrugated structure may then be further treated by application of sodium silicate to one or both exterior surfaces if increased fire resistance is desired. The resulting corrugated product may be processed into finished products such as boxes.

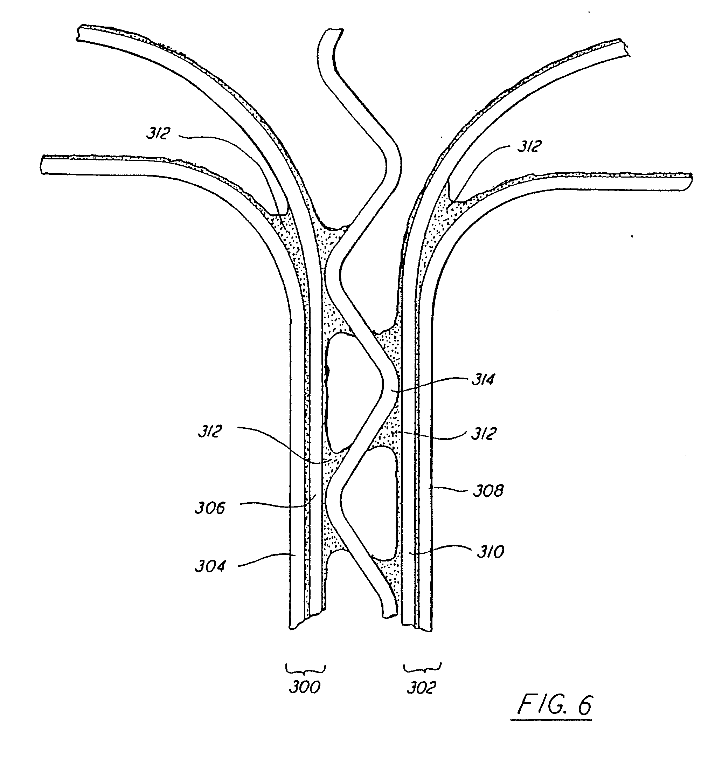

Other structural designs of laminated paper paper products made in accordance with the present invention are shown in Figs. 6-11. Referring in particular to Fig. 6, there is shown a corrugated laminate structure consisting of a double external liner board assembly 300 and double internal liner board assembly 302 consisting of first and second external liner boards 304 and 306 and first and second internal liner boards 308 and 310 laminated together by means of sodium silicate 312 in accordance with the present invention. The double external liner board assembly 300 and double internal liner board assembly 302 in turn are adhesively laminated to a (fluted) medium 314 using sodium silicate as above described. It will be seen that the double external liner board assembly and double internal liner board assembly construction as shown in Fig. 6 provides increased structural strength, and increased fire resistance due to the additional loading of sodium silicate which is available for water vapor generation and intumescence.

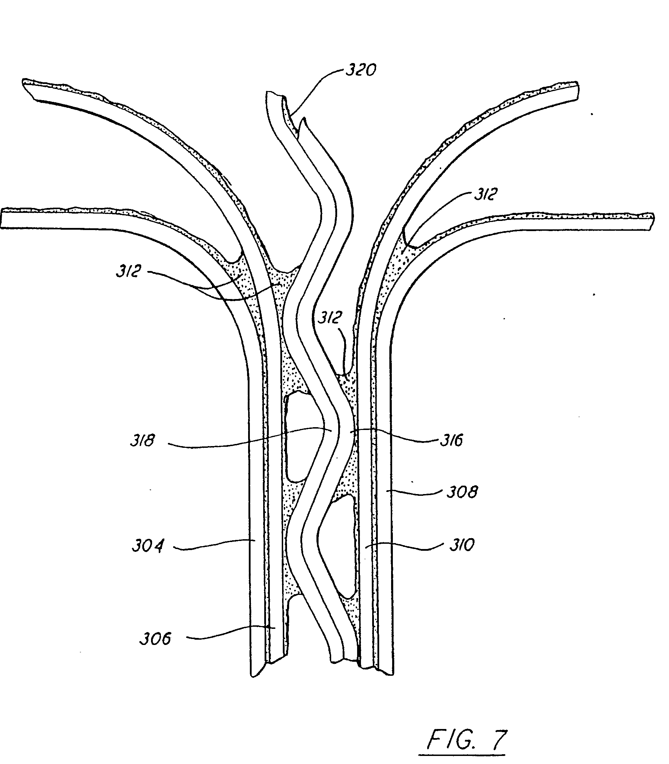

Fig. 7 shows yet another laminated corrugated structure made in accordance with the invention. The Fig. 7 construction is similar to that shown in Fig. 6, except in the Fig. 7 construction, the fluted medium comprises two fluted elements 316, 318 laminated to one another using sodium silicate 320. The corrugated structure shown in Fig. 7 provides additional structural strength and fire resistance.

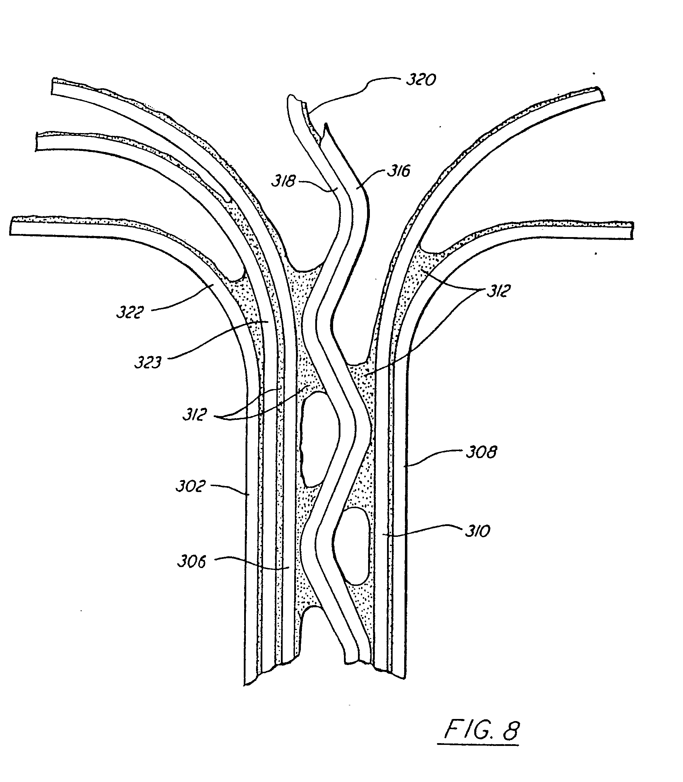

Yet another form of corrugated structure is shown in Fig. 8. The Fig. 8 product is similar to the Fig. 7 product, except that in the Fig. 8 product a third liner board 322 is adhesively affixed to one side of the structure by means of sodium silicate 323. The resulting corrugated structure provides yet additional structural strength and fire resistance.

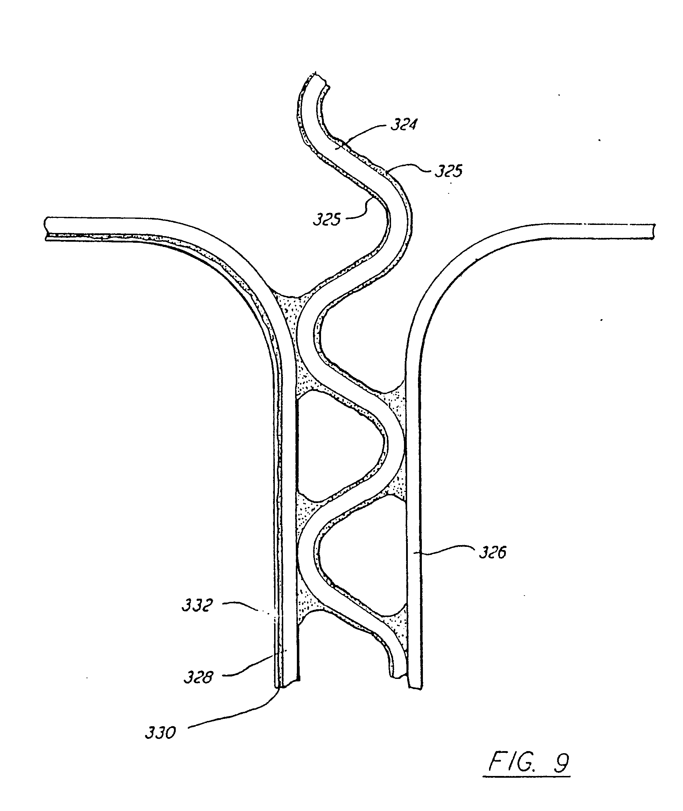

Fig. 9 shows yet another embodiment of corrugated structure made in accordance with the present invention. The Fig. 9 corrugated structure comprises a a single fluted medium 324 which is coated on both sides with a coating 325 of sodium silicate in accordance with the present invention. The single fluted medium 324 is adhesively fixed to a single internal liner board 326 and a single external liner board 328. As before, the adhesive comprises sodium silicate. The corrugated structure as just described has adequate structural strength and moderate fire resistance for many applications. Optionally, however, in order to increase fire resistance, an additional layer or coating 330 of sodium silicate may be applied to the exterior surface of liner board 328, and coating 330 in turn may be covered by a kraft sheet or other decorative sheet 332 which is adhesively bonded to the structure by means of the sodium silicate layer 330.

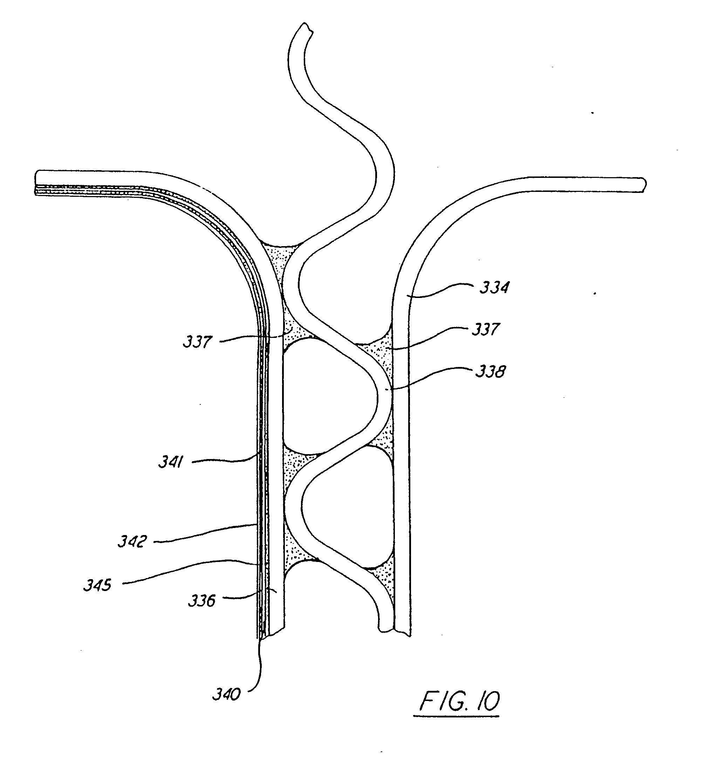

Yet another embodiment of the invention is shown in Fig. 10. The basic corrugated structure comprises interior and exterior liner boards 334 and 336, respectively, adhesively bound as before by sodium silicate 337 to a fluted medium 338. A graphite felt layer 340 is laminated to the outer surface of exterior liner board 336 by means of a sodium silicate layer 345, and a kraft paper sheet or other decorative covering 342 is adhesively affixed to the graphite felt layer 340 by means of a sodium silicate layer 345. The resulting corrugated structure may then be employed to fabricate boxes or other containers, the graphite felt layer of the resulting boxes providing electrical shielding protection to the contents of the box.

While sodium silicate above described may be employed as the combination adhesive and fire and/or heat barrier in accordance with the present invention, certain compatible inorganic materials may be added to the sodium silicate to further enhance handling characteristics of the sodium silicate, and/or mechanical properties and/or fire and heat resistance of the resulting product. The additives should be soluble in, miscible with, or suspended in the sodium silicate solution, and should be non-reactive with sodium silicate, or, if reactive with the sodium silicate, the resulting reaction product(s) should be intumescent. A typical additive which satisfies the aforesaid criteria is fumed silica. The addition of fumed silica to the sodium silicate increases the crystallization temperature of the sodium silicate, and the fire resistance (combustion temperature) of products produced therefrom. Other inorganic salts and oxides, such as ferric oxide, titanium oxide, aluminum trihydrate, sodium aluminum sulfosilicate, antimony trioxide and antimony pentoxide, mica, a carbon material such as carbon black or graphite and mixtures of one or more of the foregoing which are given as exemplary, satisfy some or all of the aforesaid criteria and are useful in accordance with the present invention.

Calcium carbonate may be added to the sodium silicate, or it may be applied as a separate surface coating, e.g. in an acrylic latex or other suitable binder. When added to the sodium silicate, the calcium carbonate should be added as a finely divided particulate such that it will remain suspended in the solution, in amounts such that the calcium carbonate constitutes a minor proportion, typically up to about seven percent by weight (dry weight) of the sodium silicate, typically one to six percent by weight, more typically one to three percent by weight, most typically one to two percent by weight. Fire resistance typically increases with the amount of calcium carbonate added to the sodium silicate up to about sevent percent by weight. Addition of calcium carbonate to the sodium silicate in an amount in excess of about seven percent by weight typically does not appear to materially further improve fire resistance of the resulting product and may be difficult to maintain in suspension. When applied as a separate surface coating, the calcium carbonate coating may be applied suspended in a suitable organic binder such as an acrylic latex or a vinyl acetate which are given as exemplary. A preferred binder is RHOPLEX B-15 (Trade Mark) available from Rohm & Haas. The manufacturer describes this product as an acrylic latex. The calcium carbonate coating typically may be applied from a suitable applicator (not shown) downstream of tractor belts 240 and 242. The calcium carbonate surface coating adds an additional refractory surface and improves heat reflection and reradiation. The calcium carbonate surface coating also improves printability. When applied as a separate surface coating, the calcium carbonate should be applied in an amount (dry weight) up to about 11 Kg per hundred square metres (22 lb per thousand square feet) of board product, typically about 1.5 to 7 Kg per hundred square metres (3 to 14 lb per thousand square feet), most typically about 1.5 to 2.5 Kg per hundred square metres (or 3 to 5 lb per thousand square feet). If desired, low melting point glass fines may be included in the calcium carbonate coating. The low melting point glass fines promote the formation of a mechanically stable refractory coating and sealed oxygen denial barrier.

A bicarbonate compound such as sodium bicarbonate or potassium bicarbonate may be added to the sodium silicate, or it may be added to the paper stock slurry at the paper mill for incorporation into the board product. When added to the sodium silicate solution, the bicarbonate compound should be added in minor amounts so as not to shift the pH of the solution to cause precipitation of the sodium silicate. The amount of bicarbonate compound as may be added to the sodium silicate solution will depend on the solids content of the sodium silicate solution. In the typical practice of the inveniton, the sodium silicate solution will have a solids content of between about 37.9% and 48.0% in which case the bicarbonate compound should be added in an amount up to about twelve percent by weight (dry weight) of the sodium silicate, typically about one to about six percent by weight, more typically one to three percent by weight. If desired a pH buffer such as sodium hydroxide/sodium bicarbonate aqueous solution may be added to the sodium silicate solution or the bicarbonate in order to stabilize the pH of the solution. When added directly to the paper stock slurry at the paper mill the bicarbonate compound additives may be varied over a wide range consistent with desired porosity of the finished product. Typically the bicarbonate compound will he added in an amount of up to about 9 Kg per hundred square metres (18 lb per thousand square feet) of finished product on a dry weight basis, more typically 1.5 to 6 Kg per hundred square metres (3 to 12 lb per thousand square feet), most typically 1.5 to 3 Kg per hundred square metres (3 to 6 lb per thousand square feet). Adding the bicarbonate compound directly to the paper stock slurry permits the incorporation of much larger quantities of bicarbonate compound into the resulting products without the problem of silicate precipitation.

The calcium carbonate and the bicarbonate compound upon exposure to high temperature undergo detachment of bound water molecules , i.e. just as in the case of sodium silicate. Following release of the bound water molecules, the calcium carbonate and the bicarbonate compound undergo thermal decomposition to produce carbon dioxide and a stable inorganic solid metal oxide, (e.g. calcium oxide in the case of calcium carbonate and sodium oxide in the case of sodium bicarbonate).

Application of minute quantities of ethylene glycol in solution to standard kraft paper stock also increases the penetration rate of the sodium silicate into the paper stock, and may advantageously modify the evolution rate of water vapor from the sodium silicate. In one embodiment, the ethylene glycol is applied to the paper stock in a water solution of approximately one to five volume percent of the ethylene glycol. Ferric oxide also may enhance the bonding strength characteristics of the sodium silicate. Compatible surfactants also may be advantageously employed in the practice of the present invention. One such compatible surfactant is SPAN (Trade Mark), which is available from ICI, United States. The manufacturer describes SPAN as comprising a fatty acid partial ester of sorbitol. Other compatible materials which may be advantageously employed in combination with the sodium silicate readily may be identified by one skilled in the art following the aforesaid teachings of the present invention.

The use of sodium silicate as an adhesive for corrugated structures in accordance with the present invention offers many advantages over the prior art, some of which are summarized below, as follows:

The manufacturing process is safe, i.e. the sodium silicate is non-flammable, and the process at least substantially reduces energy for costly heating, curing and drying steps for the adhesive as in the case of prior art systems using conventional aqueous based starch (Stein-Hall) adhesives. Thus, the invention may be practiced with only relatively low cost modification of existing equipment. Typically, the cost of modifying existing equipment will be recovered in energy savings in a short time period. Moreover, certain heating rollers, heating plates, etc. used for manufacturing corrugated structures using conventional Stein-Hall adhesives, i.e. in accordance with the prior art may be omitted, resulting in an overall reduction of the size of the plant, and reduced energy requirements of the plant. Also, the manufacturing procedure is somewhat simplified as compared with conventional processes, through-put may be increased, and curing time may be shortened as compared with conventional procedures.

Additionally, many of the product defects inherent in using heating plates and heating rollers, such as "S-warp", "blistering", "high-lows", "washboarding", "interlift" and "fracture" may he eliminated. Thus, defect rate may be lower, and process yield higher using the process of the present invention.

Moreover, corrugated structures made in accordance with the present invention are fire-resistant in a heat or flame environment up to 40 KW/m², and laminated products of the present invention may have increased structural strength and flexibility over corrugated structures made from similar paper stocks and conventional Stein-Hall adhesives. Moreover, fire resistance may not be adversely affected by flexure of the products of the present invention.

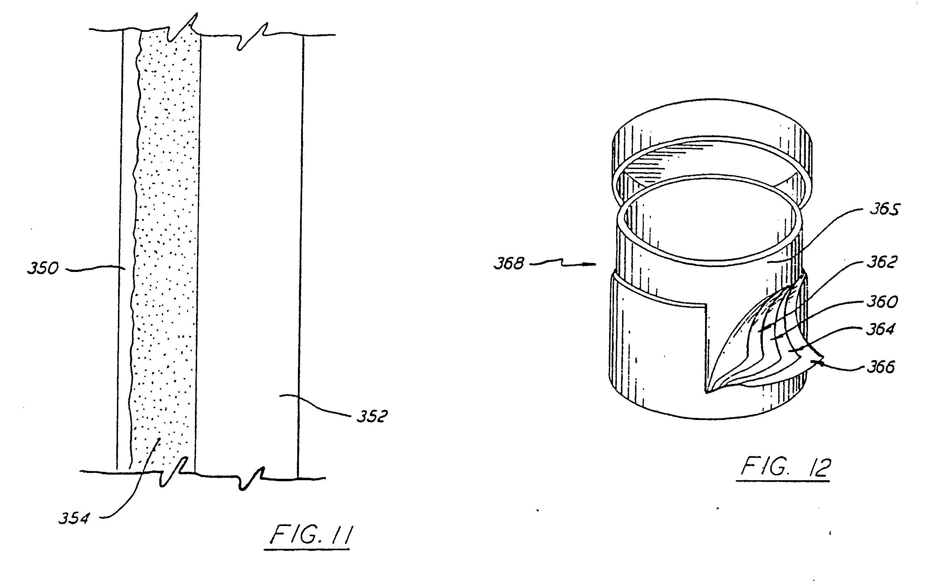

Certain changes will be obvious to one skilled in the art. For example, as shown in Fig. 11, the teachings and advantages of the present invention may be advantageously employed to produce fire resistant flat sheet product in which a decorative (sacrificial) kraft paper 350 is adhesively affixed to a paper board substrate 352 using sodium silicate adhesive 354 in accordance with the present invention. Such product may be used for certain light demand packaging needs. Fire resistant laminate decorative papers such as wrapping papers and wallpaper similarly may be produced. Alternatively, the sodium silicate may be applied directly to the combustible carrier or substrate as the top corregating/impregnating coating. In such case it may be desirable to include a compatible dye or colorant in the sodium silicate The sodium silicate also may be employed for producing laminated building products such as roofing materials, plasterboard or paneling, or for facing rigid insulation so as to increase the fire resistance of the roofing materials, plasterboard, paneling or insulation. And, as shown in Fig. 12, where electrical shielding also is desired, a graphite felt layer 360 may be adhesively affixed via sodium silicate layer 362 to a paper board stock 364, and the graphite felt layer 360 in turn covered with an paper fascia layer 366 adhesively bound by a sodium silicate layer 364 . The resulting laminate may be formed into a cylindrically shaped electrically shielded container 368 for protecting objects such as computer tapes or the like.

While the sodium silicate has been illustrated as being applied to cellulose carriers or substrates, it should be noted that substrates formed of other man-made or natural materials such as textiles, e.g., Nylon or cotton fibers or cloth may be made fire resistant by application of a coating of sodium silicate. The sodium silicate also may be applied to the surfaces of particle board or synthetic polymer products to render the particle board or synthetic polymer products fire resistant. Also, the sodium silicate coating need not be applied as a continuous coating, but may be applied, for example, in a striped pattern or as individual dots. In such case, the stripes or dots should be sufficiently closely spaced so that the coverage of the intumescent layer formed upon exposure of the coated article to heat or fire is sufficient to provide the desired fire resistance. Further, if desired, a non-combustible element such as sodium silicate may be positioned between the combustible substrate and the aluminum foil to provide additional heat reflection. Still other changes will be obvious to one skilled in the art.

## Claims

1. A corrugated laminated cellulose product comprising at least two sheets of cellulose material, including at least one liner board and at least one fluted medium sheet affixed to one another by a sodium silicate adhesive characterised by the fact that said sodium silicate is heat-foamable and is dried in place from an aqueous solution substantially under ambient conditions.

2. A laminated product as claimed in Claim 1, characterised by the fact that said sodium silicate is present in an amount (dry weight) of at least 14.6 gram per square metre of said laminated product.

3. A laminated product according to Claim 1 or 2, characterised by the fact that said sodium silicate also includes one or a mixture of compatible materials.

4. A laminated product according to Claim 3, characterised by the fact that said compatible materials are non-reactive with said sodium silicate.

5. A laminated product according to Claim 3, characterised by the fact that said compatible material or materials comprise material reactive with said sodium silicate to produce a reaction product which is intumescent upon exposure to heat.

6. A laminated product according to Claim 3, characterised by the fact that said compatible material comprises a metal oxide or salt, selected from one or a mixture of silicone oxide, ferric oxide, titanium oxide, antimony trioxide and antimony pentoxide; mica; one or a mixture of ferric chloride, aluminium trihydrate, calcium carbonate, sodium bicarbonate, potassium bicarbonate, sodium aluminium sulfosilicate; carbon black or graphite; or one or a mixture of dyes, wetting agents, surfactants, dispersants, fungicides, bactericides and extenders.

7. A laminated product according to any of Claims 1 to 6, in the form of a corrugated container wall material, comprising a fluted medium, and a liner board adhesively affixed thereto by said sodium silicate, characterised by the fact that said sodium silicate is applied to the crest of said fluted medium sheet and substantially completely covering the facing surface of the liner board.

8. A laminated product according to any of Claims 2 to 7, characterised by the fact that said sodium silicate is capable of protecting at least one of said elements in a heat or flame environment up to 40 KW/m$^2$.

9. A laminated product according to Claim 8, and including at least one electromagnetic shielding layer, characterised by the fact that said at least one electromagnetic shielding layer is adhesively affixed to said laminated product by said sodium silicate.

10. A method of forming a laminated corrugated cellulose product comprising at least two sheets of cellulose material including at least one liner board and at least one fluted medium sheet, wherein an aqueous solution of sodium silicate adhesive material is applied to at least one of said sheets and the sheets are placed in pressing relationship under conditions to promote curing of said adhesive, characterised by the fact that said sodium silicate is heat-foamable and dried-in-place substantially under ambient conditions.

11. A method according to Claim 10, characterised by including the step of adding to said sodium silicate prior to application thereof to said surfaces a compatible inorganic material which is non-reactive with said sodium silicate, or a compatible inorganic material which is reactive with said sodium silicate material to produce a reaction product which is intumescent upon exposure to heat.

12. A method according to Claim 10 or 11, characterized by including the steps of (a) fluting at least one of said sheets, and (b) applying said sodium silicate adhesive to at least the crests of said flutes.

13. A method according to any of Claims 10 to 13 characterized by including the step of applying ethylene glycol to either or both of said sheets prior to the application of said sodium silicate.

14. A method according to any of Claims 10 to 14, wherein at least one of said sheets comprises a mill-produced cellulose material, characterized by including the step of incorporating a bicarbonate compound into said cellulose material at the paper mill.

**Revendications**

1. Un produit laminé de cellulose ondulé, comprenant au moins deux feuilles de matériau cellulosique, comprenant au moins un panneau de revêtement et au moins une feuille de milieu cannelé, fixés l'un à l'autre grâce à un adhésif au silicate de sodium, caractérisé par le fait que ce silicate de sodium est susceptible de mousser sous l'effet de la chaleur et est séché en place, à partir d'une solution aqueuse, pratiquement dans des conditions ambiantes.

2. Un produit laminé selon la revendication 1, caractérisé par le fait que ledit silicate de sodium est présent en une quantité (poids à sec) d'au moins 14,6 g/m2 dans ledit produit laminé.

3. Un produit laminé selon la revendication 1 ou 2, caractérisé par le fait que ledit silicate de sodium comprend également un seul ou plusieurs matériaux, compatibles mélangés.

4. Un produit laminé selon la revendication 3, caractérisé par le fait que lesdits matériaux compatibles ne réagissent pas avec ledit silicate de sodium.

5. Un produit laminé selon la revendication 3, caractérisé par le fait que le ou lesdits matériaux compatibles comprennent un matériau qui réagit avec ledit silicate de sodium, pour produire un produit de réaction qui est intumescent une fois exposé à la chaleur.

6. Un produit laminé selon la revendication 3, caractérisé par le fait que ledit matériau compatible comprend un oxyde ou un sel métallique, choisi parmi un oxyde de silicium ou un mélange d'oxydes de silicium, l'oxyde ferrique, l'oxyde de titane, le trioxyde d'antimoine et le pentoxyde d'antimoine; le mica; un chlorure ferrique ou un mélange de chlorures ferriques, le trihydrate d'aluminium, le carbonate de calcium, le bicarbonate de calcium, le bicarbonate de potassium, le sulfosilicate de sodium aluminium; le noir de carbone ou le graphite; un colorant ou un mélange de colorants, un agent mouillant, des tensio-actifs, des dispersants, des fungicides, des bactéricides et des diluants.

7. Un produit laminé selon l'une quelconque des revendications 1 à 6, sous la forme d'un matériau de paroi ondulé pour récipient, comprenant un milieu cannelé et un panneau de revêtement lui étant fixé de façon adhésive, caractérisé par le fait que ledit silicate de sodium est appliqué sur la crête de ladite feuille de milieu cannelé et recouvre sensiblement complètement le recto de la surface du panneau de revêtement.

8. Un produit laminé selon l'une quelconque des revendications 2 à 7, caractérisé par le fait que ledit silicate de sodium est susceptible de protéger au moins l'un desdits éléments dans un environnement de chaleur ou de flammes d'intensité atteignant 40KW/m².

9. Un produit laminé selon la revendication 8, et comprenant au moins une couche d'isolation électromagnétique, caractérisé par le fait que ladite au moins une couche d'isolation électromagnétique est fixée de façon adhésive audit produit laminé grâce audit silicate de sodium.

10. Un procédé de formation d'un produit laminé de cellulose ondulé, comprenant au moins deux feuilles de matériau cellulosique, comprenant au moins un panneau de revêtement et au moins une feuille de milieu cannelé, dans lequel une solution aqueuse de matériau adhésif contenant du silicate de sodium est appliquée à au moins l'une des deux feuilles et les feuilles étant placées en relation de pressage, de façon à favoriser la polymérisation dudit adhésif, caractérisé par le fait que ce silicate de sodium est susceptible de mousser sous l'effet de la chaleur et est séché en place, pratiquement dans des conditions ambiantes.

11. Un procédé selon la revendication 10, caractérisé par le fait d'inclure les étapes d'addition audit silicate de sodium, avant son application sur lesdites surfaces, d'un matériau inorganique compatible qui ne réagit pas avec ledit silicate de sodium, ou un matériau inorganique compatible qui réagit avec ledit matériau contenant du silicate de sodium, pour produire un produit de réaction qui soit intumescent une fois exposé à la chaleur.

12. Un procédé selon la revendication 10 ou 11, caractérisé par le fait de comprendre les étapes de (a) canneler au moins d'une desdites feuilles, et (b) appliquer ledit adhésif à base de silicate de sodium sur au moins les crêtes desdites cannelures.

13. Un procédé selon la revendication 10 ou 12, caractérisé par le fait de comprendre les étapes d'application d'éthylène glycol à l'une ou au deux feuilles adhésives avant l'application dudit silicate de sodium.

14. Un procédé selon la revendication 10 ou 13, dans lequel au moins l'une desdites feuilles comprend un matériau cellulosique produit par broyage, caractérisé par le fait d'inclure l'étape d'incorporation d'un composé de bicarbonate dans ledit matériau cellulosique dans le broyeur à papier.

## Patentansprüche

1. Gewalztes gekröpftes cellulosiches Material, mit mindestens zwei Folien aus cellulosichem Material, mit mindestens einer Beschichtungsplatte und mindestens einer gerippten Folie, welche zusammen mit Hilfe eines Klebers auf Basis von Natriumsilikat befestigt werden, dadurch gekennzeichnet, dass das Natriumsilikat nach einer Wärmebeanspruchung schaumbar wird und trocknet im Platz bei Raumtemperatur.

2. Gewalztes Material nach Anspruch 1, dadurch gekennzeichnet, dass das Natriumsilikat-gehalt (trocken) entspricht mindestens 14,6 g/m2 von dem gewalzten Material.

3. Gewalztes Material nach Anspruch 1 oder 2, dadurch gekennzeichnet, dass das Natriumsilikat ebenfalls einem verträgliches Material oder einer Mischung davon enthält.

4. Gewalztes Material nach Anspruch 3, dadurch gekennzeichnet, dass die verträglichen Materialien nicht mit dem Natriumsilikat reagieren.

5. Gewalztes Material nach Anspruch 3, dadurch gekennzeichnet, dass der, bzw. die verträglichen Materialien Materalen enthalten, die mit dem Natriumsilikat reagieren und ein Reaktionsprodukt geben welches nach einer Wärmebeanspruchung nicht schwellbar wird.

6. Gewalztes Material nach Anspruch 3, dadurch gekennzeichnet, dass das verträgliche Material einen Metall-Oxyd oder Salz enthält welches bei den folgenden einzelnen Produkten oder ihrer Mischungen ausgewählt wird, und zwar : Siliziumoxyd, Eisen(III)oxyd, Titanmonoxyd,Antimontrioxyd und Antimonpentoxyd; Glimmer; Eisenchlorid, einzeln oder gemischt, Aluminium-trihydrat, Calciumcarbonat, Natriumbicarbonat, Kaliumbicarbonat, Natrium Aluminium Sulfosilikat; Russschwarz oder Graphit; Tinktur,einzeln oder einer Mischung davon, Netzmittel, Tensid, Grenzflächenaktiver Stoff, Dispergens, Fungizid, Bakterizid und Verdünner.

7. Gewalztes Material nach irgendeinem der Ansprüche 1 bis 6, als gekröpftes Wandmaterial für Behältnisse, mit einem gerippten Mittel, und einer Beschichtungsplatte die zusammen mit Hilfe eines Klebers auf Basis von Natriumsilikat befestigt werden, dadurch gekennzeichnet, dass das Natriumsilikat auf den Spitzen der Folie aus geripptem Mittel angebracht wird und die volle Frontfläche der Beschichtungsplatte wesenltlich überstreicht.

8. Gewalztes Material nach irgendeinem der Ansprüche 2 bis 7, dadurch gekennzeichnet, dass das Natriumsilikat mindestens eines der beiden Elemente im Falle einer Wärmebeanspruchung bis 40 KW/m² schützen kann.

9. Gewalztes Material nach Anspruch 8, und mit mindstens einer elecktromagnetischen Isolierschicht, dadurch gekennzeichnet, dass diese mindestens einer elecromagnetische Isolierschicht, mit dem gewalztem Material mittels des Natriumsilikats festgeklebt wird.

10. Verfahren zur Gestaltung eines gewalzten gekröpften cellulosichen Materials, mit mindestens zwei Folien aus cellulosichem Material, mit mindestens einer Beschichtungsplatte und mindestens einer gerippten Folie, wobei eine wässerige Lösung aus einem Kleber auf Basis von Natriumsilikat auf mindestens einer der Folien angebracht wird und die Folien in Druckzusammenhang gebracht werden, um die Polymerisation des Klebers zu unterstützen, dadurch gekennzeichnet, dass das Natriumsilikat nach einer Wärmebeanspruchung schaumbar wird und trocknet im Platz bei Raumtemperatur.

11. Verfahren nach Anspruch 10, gekennzeichnet durch einen Verfahrenschritt wo, bevor das Anbringen auf den Flächen, dem Natriumsilikat entweder ein nicht-organisches verträgliches Material, welches mit dem Natriumsilikat nicht reagiert, zugemischt wird, oder ein nicht-organisches verträgliches Material, welches mit dem Natriumsilikat reagiert und einen Reaktionprodukt gibt, welches nach einer Wärmebeanspruchung nicht schwellt, zugemischt wird.

12. Verfahren nach Anspruch 10 oder 11, gekennzeichnet durch die folgenden Verfahrenschritte : (a) Rippen von mindestens einer Folie, und (b) Anbringen des Natriumsilikatbasis-Klebers an mindestens auf den Spitzen der Rippen.

13. Verfahren nach irgendeinem der Ansprüche 10 bis 12, gekennzeichnet durch einen Verfahrenschritt wo, bevor das Anbringen von Natriumsilikat, ethylenglycol an einer oder an den beiden Folien angebracht wird.

14. Verfahren nach irgendeinem der Ansprüche 10 bis 14, bei dem mindestens eine der Schichte ein zerkleinetes Material enthält, gekennzeichnet durch einen Verfahrenschritt wo, am Papierzerkleiner, eine Mischung von Bicarbonat in das Material zugemischt wird.

FIG. 1

*FIG. 2*

*FIG. 3*

*FIG. 4*

16

*FIG. 5*

*FIG. 6*

*FIG. 7*

FIG. 8

*FIG. 9*

FIG. 10

350

352

354

_FIG. 11_

368

365

362

360

364

366

_FIG. 12_

EP 0 183 393 B1